(19) Europäisches Patentamt
European Patent Office
Office européen des brevets

(11) **EP 4 446 162 A1**

(12) **EUROPEAN PATENT APPLICATION**

(43) Date of publication:
**16.10.2024 Bulletin 2024/42**

(21) Application number: **24169762.2**

(22) Date of filing: **11.04.2024**

(51) International Patent Classification (IPC):
**B60L 58/12** (2019.01)       **B60L 58/21** (2019.01)
**B60L 58/25** (2019.01)       **B60L 58/22** (2019.01)

(52) Cooperative Patent Classification (CPC):
**B60L 58/21; B60L 58/12; B60L 58/22; B60L 58/25;**
B60L 50/66; B60L 2200/12; B60L 2200/46;
B60L 2240/54

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.04.2023 US 202363458663 P**
**24.01.2024 TW 113102774**

(71) Applicant: **Darfon Energy Technology Corp.**
**Taoyuan City 333017 (TW)**

(72) Inventor: **Li, Pei-Chen**
**333 Taoyuan City (TW)**

(74) Representative: **Straus, Alexander**
**2K Patent- und Rechtsanwälte**
**Bajuwarenring 14**
**82041 Oberhaching (DE)**

(54) **MULTI-BATTERY CONTROL SYSTEM AND ELECTRIC VEHICLE**

(57)    A multi-battery control system (10) is provided. The multi-battery control system includes a main battery module (12), comprising a main controller (122) and a main battery (124), wherein the main controller (124) controls the main battery (124) to provide current to a motor module (20) of an electric vehicle (1), the main controller (124) obtains a first SoC value and a first battery temperature of the main battery; and an auxiliary battery module (14), comprising an auxiliary controller (142) and an auxiliary battery (144), wherein the main controller (124) utilizes a communication interface to communicate with the auxiliary controller (142) to control the auxiliary battery module (14), the auxiliary battery module (14) selectively provides current to the motor module (20) or charges the main battery (124), the main controller (124) obtains a second SoC value and a second battery temperature of the auxiliary battery (144) through the communication interface.

FIG. 1A

EP 4 446 162 A1

**Description**

Field of the Invention

The present invention relates to a multi-battery control system and an electric vehicle, and more particularly, to a multi-battery control system and an electric vehicle in which a main battery manages an auxiliary battery.

Background of the Invention

With the popularity of electric vehicles, the application of light electric vehicles, such as electrically assisted bicycles, electric motorcycles, electric wheelchairs or golf carts, has also been emphasized. At present, the development and the endurance of light electric vehicles are limited by the battery capacity, so more batteries need to be connected in parallel to increase the capacity. For example, a light electric vehicle may be equipped with a main battery and one or more auxiliary batteries to increase the endurance. In addition, in order to simplify the wiring of a light electric vehicle, the auxiliary battery may only be connected to the main battery, which is then responsible for communicating with the motor controller and managing the other auxiliary batteries.
Therefore, how to manage the power of the main battery and the auxiliary battery has become one of the goals of the industry.

Summary of the Invention

Therefore, the purpose of the present invention is to provide a multi-battery control system and an electric vehicle to solve the above problem.
This is achieved by a multi-battery control system and an electric vehicle according to independent claims 1 and 10, respectively. The dependent claims pertain to corresponding further developments and improvements.
As will be seen more clearly from the detailed description following below, a claimed multi-battery control system is disclosed herein. The multi-battery control system, which is used for an electric vehicle, includes a main battery module, comprising a main controller and a main battery, wherein the main controller controls the main battery to provide current to a motor module of the electric vehicle, and the main controller obtains a first state of charge (SoC) value and a first battery temperature of the main battery; and an auxiliary battery module, comprising an auxiliary controller and an auxiliary battery, wherein the main controller utilizes a communication interface to communicate with the auxiliary controller to control the auxiliary battery module, the auxiliary battery module selectively provides current to the motor module or charges the main battery, and the main controller obtains a second SoC value and a second battery temperature of the auxiliary battery through the communication interface.
In another aspect of the invention, an claimed electric vehicle is disclosed in the detailed description here below. The electric vehicle includes a motor module, comprising a motor and a motor controller, wherein the motor controller controls the motor to drive the electric vehicle to move; a main battery module, comprising a main controller and a main battery, wherein the main controller utilizes a first communication interface to communicate with the motor controller, and controls the main battery to provide current to the motor, and the main controller obtains a first state of charge (SoC) value and a first battery temperature of the main battery; and an auxiliary battery module, comprising an auxiliary controller and an auxiliary battery, wherein the main controller utilizes a second communication interface to communicate with the auxiliary controller to control the auxiliary battery module, the auxiliary battery module selectively provides current to the motor module or charges the main battery, and the main controller obtains a second SoC value and a second battery temperature of the auxiliary battery through the communication interface.

Brief Description of the Drawings

FIG. 1A and FIG. 1B are schematic diagrams of a multi-battery control system and an electric auxiliary bicycle according to an embodiment of the present invention.
FIG. 2 is a flow chart of a discharge control method according to an embodiment of the present invention.
FIG. 3 is a flow chart of a discharging mode of the multi-battery control system according to an embodiment of the present invention.
FIG. 4 is a flow chart of a discharging mode of the multi-battery control system according to another embodiment of the present invention.
FIG. 5 is a flow chart of a discharging mode of the multi-battery control system according to another embodiment of the present invention.

FIG. 6 is a flow chart of a charging control method according to an embodiment of the present invention.

FIG. 7 is a flow chart of a charging mode of the multi-battery control system according to an embodiment of the present invention.

FIG. 8 is a flow chart of a charging mode of the multi-battery control system according to another embodiment of the present invention.

Detailed Description

Certain terms are used throughout the description and following claims to refer to particular components. As one skilled in the art will appreciate, hardware manufacturers may refer to a component by different names. This document does not intend to distinguish between components that differ in name but not function. In the following description and in the claims, the terms "include" and "comprise" are utilized in an open-ended fashion, and thus should be interpreted to mean "include, but not limited to". Also, the term "couple" is intended to mean either an indirect or direct electrical connection. Accordingly, if one device is coupled to another device, that connection may be through a direct electrical connection, or through an indirect electrical connection via other devices and connections.

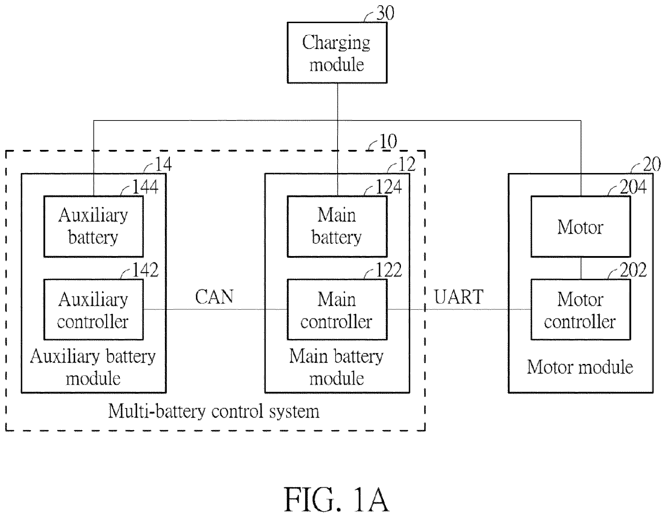

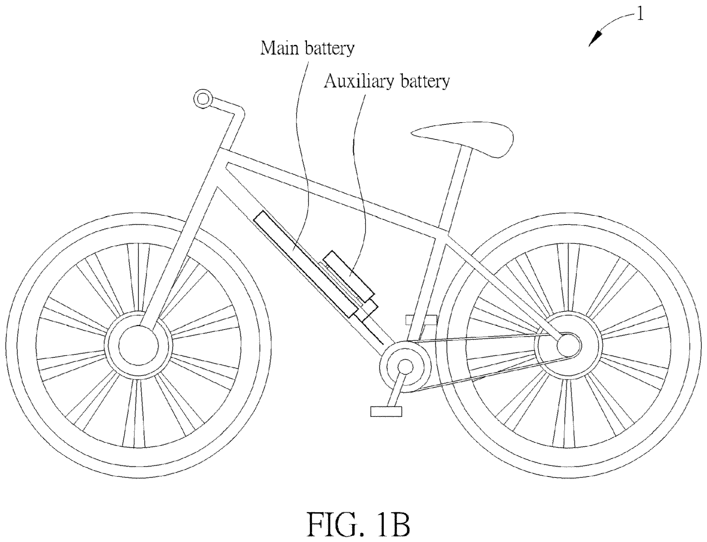

FIG. 1A and FIG. 1B are schematic diagrams of a multi-battery control system 10 and an electric auxiliary bicycle 1 according to an embodiment of the present invention. The multi-battery control system 10 includes a main battery module 12 and an auxiliary battery module 14, and may be installed at any position of the electric auxiliary bicycle 1 to provide current to a motor module 20 of the electric auxiliary bicycle 1. For example, the main battery module 12 may be installed in the down tube of the electric auxiliary bicycle 1; the auxiliary battery module 14 may be installed on the water bottle cage of the electric auxiliary bicycle 1; the motor module 20 may be installed in the front wheel hub, rear wheel hub or front motor, rear motor or mid-mounted motor of the central axis of the electric auxiliary bicycle 1, but is not limited thereto. It should be noted that in addition to the electric auxiliary bicycle 1, the multi-battery control system 10 of the present invention may also be applied for electric motorcycles, electric wheelchairs, golf carts or other form of electric vehicles. Those skilled in the art may make appropriate adjustments according to system requirements.

In detail, as shown in FIG. 1A, the main battery module 12 includes a main controller 122 and a main battery 124. The auxiliary battery module 14 includes an auxiliary controller 142 and an auxiliary battery 144. The motor module 20 includes a motor controller 202 and a motor 204. The main controller 122 is coupled to the motor controller 202, and controls the main battery 124 to provide current to the motor 204. It should be noted that, the motor 204 and the motor controller 202 of the motor module 20 may be integrated into one component or separated into two components. In addition, the main controller 122 is coupled to the auxiliary controller 142 to control the auxiliary battery module 14, so that the auxiliary battery 144 selectively provides current to the motor module 20 or charges the main battery 124. It should be noted that the main controller 122 utilizes a first communication interface to communicate with the motor controller 202, and utilizes a second communication interface to communicate with the auxiliary controller 142. For example, the first communication interface may be a universal asynchronous receiver/transmitter (UART), the second communication interface may be a controller area network (CAN), but is not limited thereto. It should be noted that the vehicle communication protocols such as the universal asynchronous transceiver and controller area network are well known in the art, so it is not repeated here. In addition, as shown in FIG. 1A, the multi-battery control system 10 may be coupled to a charging module 30 and enter into a charging state to charge the main battery 124 and/or the auxiliary battery 144.

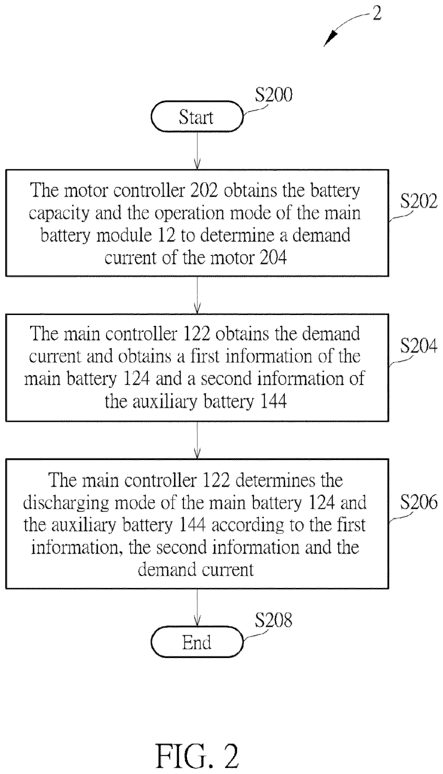

It should be noted that, the main battery module 12 or the main controller 122 may include a microcontroller unit (MCU) and a memory. The memory stores a programing code for instructing the MCU to execute a discharge control method. The discharge control method may be summarized as a process 2, as shown in FIG. 2. The process 2 includes the following steps:

Step S200: Start.

Step S202: The motor controller 202 obtains the battery capacity and the operation mode of the main battery module 12 to determine a demand current of the motor 204.

Step S204: The main controller 122 obtains the demand current and obtains a first information of the main battery 124 and a second information of the auxiliary battery 144.

Step S206: The main controller 122 determines the discharging mode of the main battery 124 and the auxiliary battery 144 according to the first information, the second information and the demand current.

Step S208: End.

According to the process 2, in step S202, when the user rides the electric auxiliary bicycle 1, the main controller 122 is coupled to the motor controller 202 to obtain the present demand current. The demand current represents the amount of current that the motor 204 is expected to draw from the main battery 124 and/or the auxiliary battery 144. It should be noted that the motor controller 202 may obtain the battery capacity of the multi-battery control system 10 through the first communication interface, and determine the demand current to be drawn according to the operation mode of the user and the battery capacity of the multi-battery control system 10. In other words, the electric auxiliary bicycle 1 has different demand currents in different operation modes. The operation mode may be a more power-consuming sports mode or a relatively power-saving power saving mode, but is not limited thereto. In step S204, the main controller 122 obtains the first information of the main battery 124, and communicates with the auxiliary controller 142 to obtain the second information of the auxiliary battery 144. In detail, the main battery module 12 and the auxiliary battery module 14 may respectively include a state of charge (SoC) sensor, a battery temperature sensor or a battery voltage sensor for sensing a first SoC value, a first battery temperature and a first battery voltage (the first information) of the main battery 124 and a second SoC value, a second battery temperature and a second battery voltage (the second information) of the auxiliary battery 144. It should be noted that those skilled in the art may appropriately add other type of sensors and the sensing information according to the requirements, but is not limited thereto. In step S206, the main controller 122 determines the discharging mode of the main battery 124 and the auxiliary battery 144 to manage the power of the main battery 124 and the auxiliary battery 144 according to the first information, the second information and the demand current.

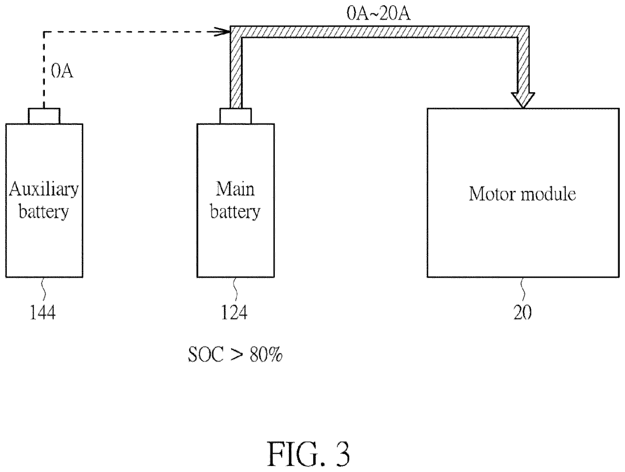

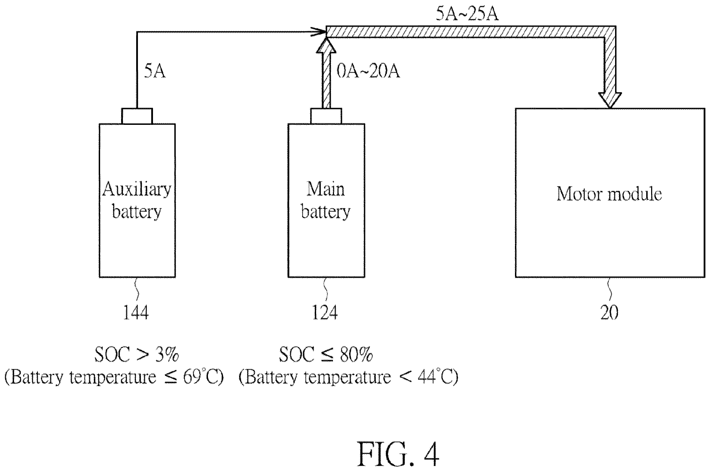

In detail, the main controller 122 may determine whether the first SoC value of the main battery 124 is greater than a first specific value and whether the second SoC value of the auxiliary battery 144 is greater than a second specific value, and determine the discharging mode of the main battery 124 and the auxiliary battery 144 accordingly. In an embodiment, as shown in FIG. 3, when the first SoC value of the main battery 124 is greater than the first specific value (such as 80%), the main controller 122 controls the main battery 124 to provide current (0A-20A) to the motor module 20, and commands the auxiliary controller 142 to control the auxiliary battery 144 to enter a standby mode and not to output current to the motor module 20. In another embodiment, as shown in FIG. 4, when the first SoC value of the main battery 124 is less than or equal to the first specific value (80%) and the second SoC value of the auxiliary battery 144 is greater than the second specific value (3%), the main controller 122 controls the main battery 124 to provide current (0A-20A) to the motor module 20, and commands the auxiliary controller 142 to control the auxiliary battery 144 to provide current (5A) to the motor module 20. It should be noted that, when the second SoC value of the auxiliary battery 144 is less than or equal to the second specific value(3%), the main controller 122 commands the auxiliary controller 142 to control the auxiliary battery 144 to enter into the standby mode. In other words, when the battery capacity of the auxiliary battery 144 is extremely low, the auxiliary battery 144 does not provide current to the motor module 20, and the remaining battery capacity is only used to maintain the communication between the main controller 122 and the auxiliary controller 142. In another embodiment, as shown in FIG. 4, in addition to determining the discharging mode of the main battery 124 and the auxiliary battery 144 according to the SoC values of the main battery 124 and the auxiliary battery 144, the present invention may also add the battery temperatures of the main battery 124 and the auxiliary battery 144 as a determining condition. For example, when the first SoC value of the main battery 124 is less than or equal to the first specific value (80%), the second SoC value of the auxiliary battery 144 is greater than the second specific value (3%), a first battery temperature of the main battery 124 is less than or equal to a first temperature (44°C) and a second battery temperature of the auxiliary battery 144 is less than or equal to a second temperature (69°C), the main controller 122 controls the main battery 124 to provide current (0A-20A) to the motor module 20, and commands the auxiliary controller 142 to control the auxiliary battery 144 to provide current (5A) to the motor module 20. It should be noted that, in all embodiments of the present invention, those skilled in the art may appropriately add other type of sensors and the sensing information as the determining conditions according to the requirements, for example, the temperatures of the transistors in the auxiliary battery module 14, but is not limited thereto.

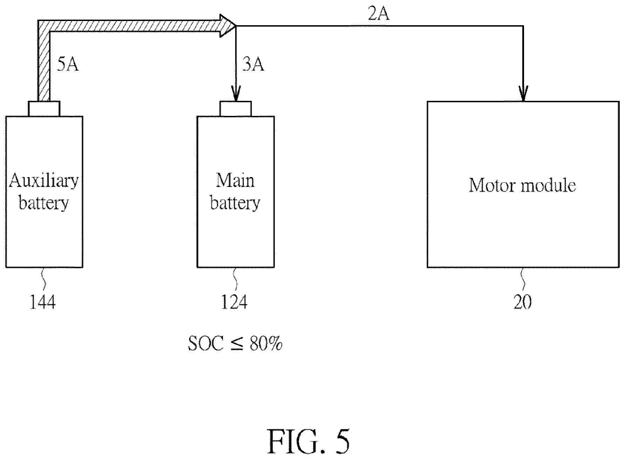

In an embodiment, when the electric auxiliary bicycle 1 is stationary or traveling downhill, the demand current of the motor 204 is in a light load state. In other words, the motor 204 does not need to output electric assistance or only needs to output slight electric assistance. As shown in FIG. 5, when the demand current of the motor module 20 or the motor 204 is less than or equal to a threshold and the first SoC value of the main battery 124 is less than or equal to the first specific value (5A), the main controller 122 controls the main battery 124 not to output current, and commands the auxiliary controller 142 to control the auxiliary battery 144 to provide current (5A) to the motor module 20 (2A) and the main battery 124 (3A). It should be noted that, in the above embodiments, current provided from the auxiliary battery 144 may be a fixed value (5A), and the threshold may be set as the fixed value (5A). Therefore, when the demand current of the motor module 20 is less than current (5A) provided from the auxiliary battery 144, the motor module 20 only draws current (2A) from the auxiliary battery 144. In addition, the main controller 122 controls the main battery 124 to enter into the charging mode. In this way, in addition to providing 2A current to the motor module 20, the auxiliary battery 144 also provides 3A current to charge the main battery 124.

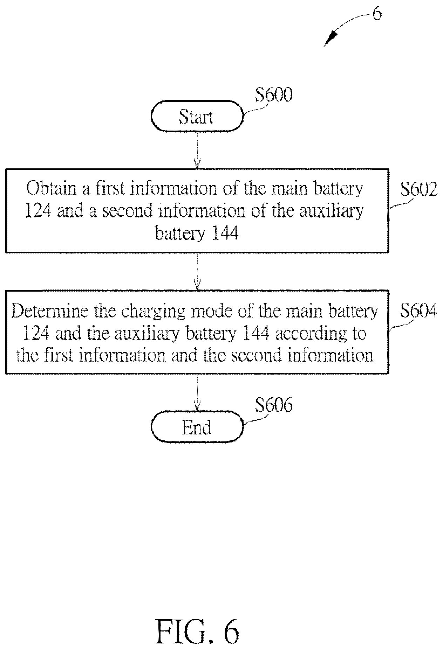

On the other hand, when the multi-battery control system 10 is coupled to the charging module 30 and enters into the charging mode, the programing code also instructs the MCU to execute a charging control method. The charging control method may be summarized as a process 6, as shown in FIG. 6. The process 6 includes the following steps:

Step S600: Start.

Step S602: Obtain a first information of the main battery 124 and a second information of the auxiliary battery 144.

Step S604: Determine the charging mode of the main battery 124 and the auxiliary battery 144 according to the first information and the second information.

Step S606: End.

According to the process 6, in step S602, the main controller 122 obtains the first information of the main battery 124, and communicates with the auxiliary controller 142 to obtain the second information of the auxiliary battery 144. As mentioned above, the first information may include the first SoC value of the main battery 124, the first battery temperature and the first battery voltage. The second information may include the second SoC value of the auxiliary battery 144, the second battery temperature and the second battery voltage. It should be noted that, those skilled in the art may appropriately add other type of sensors and the sensing information according to the requirements, but is not limited thereto. In step S604, the main controller 122 determines the charging mode of the main battery 124 and the auxiliary battery 144 according to the first information and the second information to manage the power of the main battery 124 and the auxiliary battery 144.

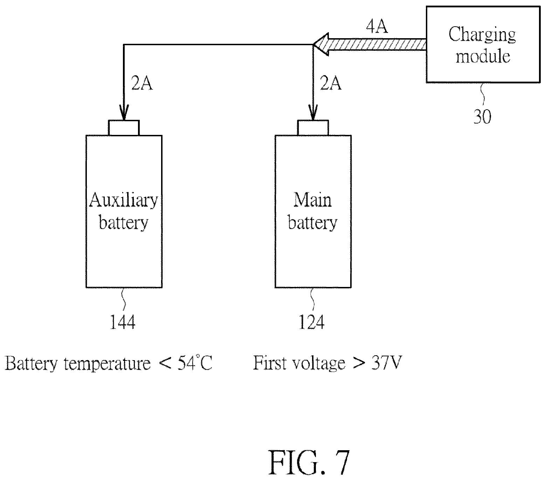

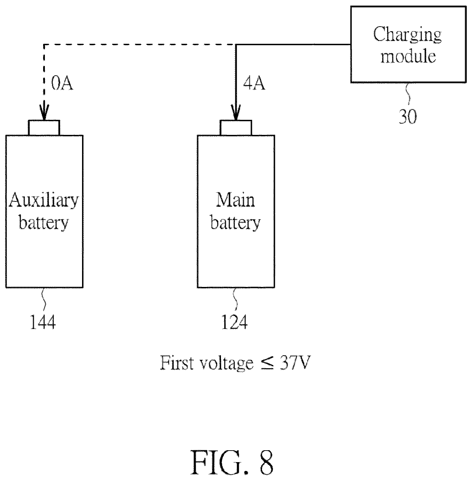

In detail, the main controller 122 may determine whether the power of the main battery 124 is sufficient, and determine the charging mode of the main battery 124 and the auxiliary battery 144 accordingly. For example, the main controller 122 determines whether the first battery voltage of the main battery 124 is greater than a first voltage or whether the first SoC value is greater than the first specific value, to determine whether the power of the main battery 124 is sufficient, but is not limited thereto. In an embodiment, the charging module 30 may provide 4A current to charge the multi-battery control system 10, and when the first voltage of the main battery 124 is greater than the first voltage (37V), the main controller 122 controls the main battery 124 and the auxiliary battery 144 to be charged simultaneously. As shown in FIG. 7, the main controller 122 controls the main battery 124 to receive the current (2A) provided from the charging module 30, and commands the auxiliary controller 142 to control the auxiliary battery 144 to receive the current (2A) provided from the charging module 30. In other words, when the power of the main battery 124 is sufficient, the main battery 124 and the auxiliary battery 144 may be charged simultaneously. It should be noted that the charging current distribution of the main battery 124 and the auxiliary battery 144 is (2A+2A), but is not limited thereto. In another embodiment, as shown in FIG. 7, in addition to determining the charging mode of the main battery 124 and the auxiliary battery 144 according to the first voltage of the main battery 124, the present invention may add the battery temperature of the auxiliary battery 144 as the determining condition. For example, when the first voltage of the main battery 124 is greater than the first voltage (37V) and the second battery temperature of the auxiliary battery 144 is less than or equal to a third temperature (54°C), the main controller 122 controls the main battery 124 and the auxiliary battery 144 to be charged simultaneously. When the first voltage of the main battery 124 is greater than the first voltage (37V) and the second battery temperature of the auxiliary battery 144 is greater than the third temperature (54°C), the main controller 122 controls the main battery 124 to be charged, and commands the auxiliary battery 144 not to be charged or to enter into the standby mode. In an embodiment, as shown in FIG. 8, when the first voltage of the main battery 124 is less than or equal to the first voltage (37V), the main controller 122 controls the main battery 124 to be charged, and commands the auxiliary controller 142 to control the auxiliary battery 144 not to be charged or to enter into the standby mode. In other words, when the power of the main battery 124 is not sufficient, all the charging current (4A) of the charging module 30 is provided to the main battery 124 for charging.

In short, the auxiliary controller 142 of the auxiliary battery module 14 of the present invention receives commands from the main controller 122 to determine whether to charge or discharge the auxiliary battery 144. It should be noted that, the auxiliary controller 142 is only coupled to the main controller 122 through the controller area network CAN, but is not directly coupled to the motor controller 202. Therefore, from the perspective of the motor controller 202, the main battery 124 and the auxiliary battery 144 of the multi-battery control system 10 may be regarded as an equivalent battery. For example, if the capacity of the main battery 124 is three times of the capacity of the auxiliary battery 144, then the capacity and the SoC value of the equivalent battery satisfy the following equation:

$$\text{The capacity of the equivalent battery} = 4 \, (\text{the capacity of the auxiliary battery})$$

The SoC value of the equivalent battery = 1(the second SoC value)/4 + 3(the first SoC value)/4

In summary, in the multi-battery control system of the present invention, the main controller controls the main battery and commands the auxiliary controller to control the auxiliary battery to switch between various discharging modes and charging modes. Therefore, the present invention has the advantage of managing the SoC values of the main battery and the auxiliary battery, thereby improving the utilization efficiency of the main battery and the auxiliary battery and extending the battery life.

**Claims**

1. A multi-battery control system (10), for an electric vehicle (1), **characterized by** comprising:

   a main battery module (12), comprising a main controller (122) and a main battery (124), wherein the main controller (122) controls the main battery (124) to provide current to a motor module (20) of the electric vehicle (1), and the main controller (122) obtains a first state of charge (SoC) value and a first battery temperature of the main battery (124); and
   an auxiliary battery module (14), comprising an auxiliary controller (142) and an auxiliary battery (144), wherein the main controller (122) utilizes a communication interface to communicate with the auxiliary controller (142) to control the auxiliary battery module (14), the auxiliary battery module (14) selectively provides current to the motor module (20) or charges the main battery (124), and the main controller (122) obtains a second SoC value and a second battery temperature of the auxiliary battery (144) through the communication interface.

2. An electric vehicle (1), **characterized by** comprising:

   a motor module (20), comprising a motor (204) and a motor controller (202), wherein the motor controller (202) controls the motor (204) to drive the electric vehicle (1) to move;
   a main battery module (12), comprising a main controller (122) and a main battery (124), wherein the main controller (122) utilizes a first communication interface to communicate with the motor controller (202), and controls the main battery (124) to provide current to the motor (204), and the main controller (122) obtains a first state of charge (SoC) value and a first battery temperature of the main battery (124); and
   an auxiliary battery module (14), comprising an auxiliary controller (142) and an auxiliary battery, wherein the main controller (122) utilizes a second communication interface to communicate with the auxiliary controller (142) to control the auxiliary battery module (14), the auxiliary battery module (14) selectively provides current to the motor module (20) or charges the main battery (124), and the main controller (122) obtains a second SoC value and a second battery temperature of the auxiliary battery (144) through the communication interface.

3. The multi-battery control system (10) of claim 1 or the electric vehicle (1) of claim 2, **characterized in that** when the first SoC value of the main battery (124) is greater than a first specific value, the main battery (124) provides current to the motor module (20), and the main controller (122) controls the auxiliary battery (144) not to output current to the motor module (20).

4. The multi-battery control system (10) of claim 1 or the electric vehicle (1) of claim 2, **characterized in that** when the first SoC value of the main battery (124) is less than or equal to the first specific value and the second SoC value of the auxiliary battery (144) is greater than a second specific value, the main battery (124) and the auxiliary battery (144) simultaneously provide current to the motor module (20).

5. The multi-battery control system (10) or the electric vehicle (1) of claim 4, **characterized in that** when the first battery temperature is less than or equal to a first temperature and the second battery temperature is less than or equal to a second temperature, the main battery (124) and the auxiliary battery (144) simultaneously provide current to the motor module (20).

6. The multi-battery control system (10) of claim 1 or the electric vehicle (1) of claim 2, **characterized in that** when a demand current of the motor module (20) is less than or equal to a threshold and the first SoC value is less than or equal to the first specific value, the auxiliary battery (144) provides current to the motor module (20) and the main battery (124).

7. The multi-battery control system (10) or the electric vehicle (1) of claim 6, **characterized in that** output current of the auxiliary battery (144) is a fixed value.

8. The multi-battery control system (10) of claim 1 or the electric vehicle (1) of claim 2, **characterized in that** when the multi-battery control system is in a charging state and a voltage of the main battery (124) is greater than a first voltage, the main controller (122) controls the main battery (124) and the auxiliary battery (144) to be charged simultaneously.

9. The multi-battery control system (10) or the electric vehicle (1) of claim 8, **characterized in that** when the second battery temperature of the auxiliary battery (144) is less than or equal to a third temperature, the main controller (122) controls the main battery (124) and the auxiliary battery (144) to be charged simultaneously.

10. The multi-battery control system (10) of claim 1 or the electric vehicle (1) of claim 2, **characterized in that** when the multi-battery control system is in a charging state and a voltage of the main battery (124) is less than or equal to a first voltage, the main controller (122) controls the main battery (124) to be charged and the auxiliary battery (144) not to be charged.

FIG. 1A

Main battery

Auxiliary battery

1

FIG. 1B

2

Start — S200

The motor controller 202 obtains the battery capacity and the operation mode of the main battery module 12 to determine a demand current of the motor 204 — S202

The main controller 122 obtains the demand current and obtains a first information of the main battery 124 and a second information of the auxiliary battery 144 — S204

The main controller 122 determines the discharging mode of the main battery 124 and the auxiliary battery 144 according to the first information, the second information and the demand current — S206

End — S208

# FIG. 2

0A~20A

0A

Auxiliary
battery

Main
battery

Motor module

144

124

20

SOC > 80%

FIG. 3

5A~25A

5A

0A~20A

| Auxiliary battery | Main battery | Motor module |

144

124

20

SOC > 3%
(Battery temperature ≤ 69°C)

SOC ≤ 80%
(Battery temperature < 44°C)

FIG. 4

FIG. 5

—6

S600

( Start )

Obtain a first information of the main battery 124 and a second information of the auxiliary battery 144    S602

Determine the charging mode of the main battery 124 and the auxiliary battery 144 according to the first information and the second information    S604

S606

( End )

FIG. 6

4A

Charging
module

30

2A

2A

Auxiliary
battery

Main
battery

144

124

Battery temperature < 54°C

First voltage > 37V

FIG. 7

Charging module

30

4A

Main battery

124

0A

Auxiliary battery

144

First voltage ≤ 37V

FIG. 8

Europäisches Patentamt
European Patent Office
Office européen des brevets

**EUROPEAN SEARCH REPORT**

Application Number

EP 24 16 9762

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/111121 A1 (WU YI-TSUNG [TW]) 24 April 2014 (2014-04-24) | 1,2,6,7 | INV. B60L58/12 |
| A | * paragraph [0003] - paragraph [0066]; figure 5 * | 3-5,8-10 | B60L58/21 B60L58/25 B60L58/22 |
| X | US 2016/250937 A1 (HAYSLETT STEVEN L [US] ET AL) 1 September 2016 (2016-09-01) * paragraph [0015] - paragraph [0043]; figures 1,7 * | 1-10 | |
| X | US 2022/080908 A1 (SETA ITARU [JP] ET AL) 17 March 2022 (2022-03-17) | 1-8,10 | |
| A | * paragraph [0028] - paragraph [0078]; figures 1,3,5,6a, 6b * | 9 | |
| A | US 2017/021739 A1 (TSUJI SHINJI [JP] ET AL) 26 January 2017 (2017-01-26) * paragraph [0007] - paragraph [0055]; figures 1,9 * | 1,2 | |

TECHNICAL FIELDS SEARCHED (IPC)

B60L

The present search report has been drawn up for all claims

| Place of search | Date of completion of the search | Examiner |
|---|---|---|
| The Hague | 5 September 2024 | Cuk, Vladimir |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 9762

This annex lists the patent family members relating to the patent documents cited in the above-mentioned European search report.
The members are as contained in the European Patent Office EDP file on
The European Patent Office is in no way liable for these particulars which are merely given for the purpose of information.

05-09-2024

| Patent document cited in search report | | Publication date | Patent family member(s) | | Publication date |
|---|---|---|---|---|---|
| US 2014111121 | A1 | 24-04-2014 | US 2014111121 A1<br>US 2016236588 A1<br>US 2019009688 A1<br>WO 2014063065 A1 | | 24-04-2014<br>18-08-2016<br>10-01-2019<br>24-04-2014 |
| US 2016250937 | A1 | 01-09-2016 | CA 2921632 A1<br>CN 105932727 A<br>DE 102016103409 A1<br>US 2016250937 A1 | | 27-08-2016<br>07-09-2016<br>01-09-2016<br>01-09-2016 |
| US 2022080908 | A1 | 17-03-2022 | CN 114261311 A<br>DE 102021123630 A1<br>JP 7522618 B2<br>JP 2022049129 A<br>US 2022080908 A1 | | 01-04-2022<br>17-03-2022<br>25-07-2024<br>29-03-2022<br>17-03-2022 |
| US 2017021739 | A1 | 26-01-2017 | EP 3088286 A2<br>JP 6157536 B2<br>JP 2016210240 A<br>TW 201641355 A<br>US 2017021739 A1 | | 02-11-2016<br>05-07-2017<br>15-12-2016<br>01-12-2016<br>26-01-2017 |

EPO FORM P0459

For more details about this annex : see Official Journal of the European Patent Office, No. 12/82